# EUROPEAN PATENT SPECIFICATION

(11) **EP 2 960 586 B1**
(45) Date of publication and mention of the grant of the patent: **22.03.2017**
(21) Application number: 15170189.3
(22) Date of filing: 02.06.2015
(51) Int. Cl.: F24D 17/02, F24D 19/10, F24H 9/20, F24H 4/04

(54) **HOT WATER SUPPLY DEVICE AND CONTROLLER EMPLOYED THEREIN**
HEISSWASSERVERSORGUNGSVORRICHTUNG UND DARIN VERWENDETE STEUERUNG
DISPOSITIF D'ALIMENTATION EN EAU CHAUDE ET CONTRÔLEUR EMPLOYÉ DANS CELUI-CI

(30) Priority: 16.06.2014 JP 2014123024
(43) Date of publication of application: 30.12.2015
(73) Proprietor: Panasonic Intellectual Property Management Co., Ltd., Osaka-shi, Osaka 540-6207 (JP)
(72) Inventor: YAMAMOTO, Teruo, Osaka-shi, Osaka 540-6207 (JP); AOYAMA, Shigeo, Osaka-shi, Osaka 540-6207 (JP); MORIWAKI, Shunji, Osaka-shi, Osaka 540-6207 (JP); SHIGETA, Akihiro, Osaka-shi, Osaka 540-6207 (JP)
(74) Representative: Eisenführ Speiser

(56) References cited:
- EP-A2- 1 298 395
- DE-A1-102006 054 828
- US-A1- 2003 093 186
- US-A1- 2012 060 771
- US-A1- 2013 092 102

## Description

### FIELD OF INVENTION

The present invention relates to a hot water supply device and a controller employed in the same hot water supply device.

### BACKGROUND OF INVENTION

When detecting a decrease in an amount of hot water stored in a storage tank, one of conventional hot-water supply devices activates its heat source automatically to start a heating operation, thereby heating water that is supplied to the storage tank for filling up a decreased amount of hot water.

For instance, the hot water supply device disclosed in Japanese Patent Publication No. 3755397 increases a minimum amount of hot water when an amount of hot water in a storage tank decreases smaller than a predetermined minimum amount. On the other hand, when the hot water in the tank is maintained for a given period not smaller than the minimum amount, the hot water supply device lowers the minimum amount. In other words, a controller of the device changes the minimum amount of hot water depending on amounts used by users, thereby preventing a short or a surplus of the hot water.

However, the conventional structure discussed above increases the minimum amount not before a present amount falls below the predetermined minimum amount, so that if a large amount of hot water is used abruptly, a user possibly encounters a short in hot water.

From US 2012 060771 A1 a hot water heater and method for controlling same are known. The document shows all the features of the preamble of claim 1. The known hot water heater can be programmed to only heat water when the consumer anticipates that they will need it. The consumer can control the temperature of the water, the time at which the hot water will be needed, and can specify the speed vs. efficiency tradeoff regarding how the water is heated by selecting an operating mode.

### SUMMARY OF INVENTION

The present invention addresses the problem discussed above, and aims to provide a controller that prevents a short in hot water and is excellent in energy efficient.

The controller according to the invention is defined in claim 1.

The controller starts the heating operation when an amount of hot water in the tank decreases smaller than a first start amount, and ends the heating operation when the amount of hot water in the tank increases greater than a first stop amount. During the foregoing operation cycle, when a supply of hot water takes place by the end of a time zone in which a largest amount of hot water per unit time is used, the controller changes the first start amount to a second start amount that is greater than the first start amount.

The controller is configured to start the heating operation when an amount of hot water in the tank decreases smaller than the first start amount, and ends the heating operation when the amount of hot water in the tank increases greater than a first stop amount. During the foregoing operation cycle, when a supply of hot water takes place by the end of a time zone in which a largest amount of hot water per unit time is used, the controller changes the first start amount to a second start amount that is greater than the first start amount.

In the case where a supply of hot water takes place in a time zone prior to the time zone in which the largest amount of hot water is used, the foregoing structure allows starting the heating operation although a relatively greater amount of hot water still remains in the tank, whereby the hot water can be produced sooner.

The present invention thus can provide the controller that can prevent a short in hot water and is excellent in energy efficient.

### BRIEF DESCRPTION OF DRAWINGS

FIG. 1 shows a structure of a hot water supply device in accordance with a first embodiment of the present invention.
FIG. 2 is a flowchart of controlling a heating operation of the hot water supply device in accordance with the first embodiment.
FIG. 3 shows a general trend of amounts of hot water used with a lapse of time in one day (i.e. one operation cycle).
FIG. 4 is a flowchart of change control over a start condition and a stop condition of the heating operation in accordance with the first embodiment.
FIG. 5A schematically illustrates a temperature distribution of hot water stored in a storage tank when the heating operation is carried out based on a regular condition set in step S02 in accordance with the first embodiment.
FIG. 5B schematically illustrates a temperature distribution of hot water stored in the storage tank when the heating operation is carried out based on the regular condition set in step S02 in accordance with the first embodiment.
FIG. 6A schematically illustrates a temperature distribution of hot water in the storage tank when a supply of hot water takes place in accordance with the first embodiment.
FIG. 6B schematically illustrates a temperature distribution of hot water in the storage tank when a supply of hot water takes place in accordance with the first embodiment.
FIG. 6C schematically illustrates a temperature distribution of hot water in the storage tank when a supply of hot water takes place in accordance with the first embodiment.
FIG.7 shows examples of a start condition and an stop condition in accordance with the first embodiment.
FIG.8 shows another structure of the hot water supply device in accordance with the first embodiment.
FIG.9 is a flowchart of change control over a start condition and a stop condition of the heating operation in accordance with a second embodiment.

### PREFERRED EMBODIMENTS FOR CARRYING OUT THE INVENTION

Exemplary embodiments of the present invention are demonstrated hereinafter with reference to the accompanying drawings. The present invention is not limited by these embodiments.

### FIRST EXEMPLARY EMBODIMENT

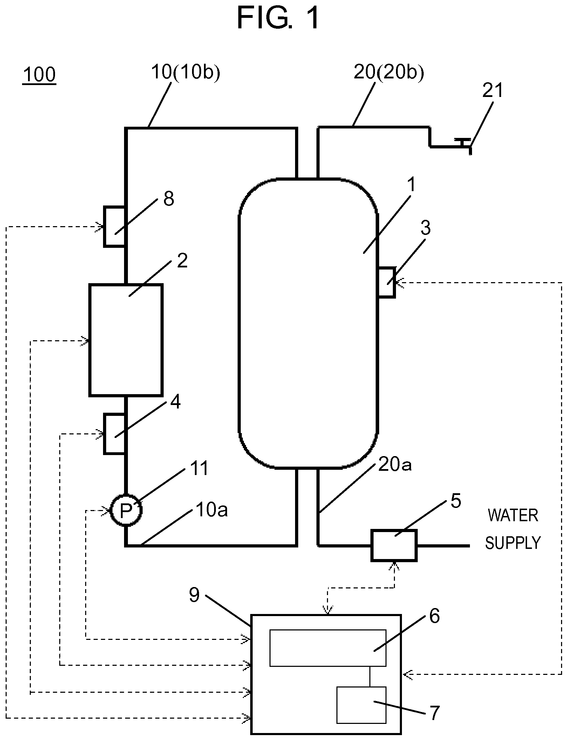

FIG. 1 shows a structure of hot water supply device 100 in accordance with the first embodiment of the present invention. Device 100 is formed of storage tank 1 for storing hot water, heat source 2 for heating the hot water in storage tank 1, and controller 9. In this embodiment, a heat pump device is used as heat source 2.

A lower section of storage tank 1 is connected to heat source 2 with water input pipe 10a. An upper section of tank 1 is connected to heat source 2 with hot water output pipe 10b. This structure allows connecting storage tank 1 and heat source 2 together via pipes 10a and 10b in an annular manner, thereby forming heating circuit 10.

In water input pipe 10a, pump 11 disposed as a transmitter of hot water and temperature sensor 4 for input water that flows into heat source 2 are disposed. In water output pipe 10a, temperature sensor 8 for output water that flows out from heat source 2 is disposed.

When the heating operation is carried out for heating the hot water in storage tank 1, controller 9 activates heat source 2 and pump 11. The water in the lower section of tank 1 is transmitted to heat source 2 via water input pipe 10a by pump 11 before the water is heated. The heated water then runs through water output pipe 10b and flows into tank 1 from the upper section of tank 1. This mechanism allows storing hot water of higher temperature sequentially from the upper section of tank 1.

As a result, a temperature layer having higher temperatures on higher levels and lower temperatures on lower levels is formed inside storage tank 1. Temperature sensor 3 is provided to tank 2 for sensing the temperature of hot water in tank 1. Sensor 3 is preferably disposed such that it can sense the temperature of hot water above the center of the height of tank 1.

The heat pump device, namely, heat source 2, includes a refrigerant circuit formed of a compressor, radiator, expansion part, and evaporator connected to each other in an annular manner with refrigerant pipes. The refrigerant can be selected from carbon dioxide refrigerant, and fluorocarbon refrigerant such as R410A, R407C, and R134a. Use of the carbon dioxide refrigerant needs a supercritical heat pump device that acts at a super critical pressure.

Water supply pipe 20a is connected to the lower section of storage tank 1 for supplying water from a source such as a water service pipe. Hot water supply pipe 20b is connected to the upper section of tank 1, and the hot water flows through pipe 20b toward a hot water supply terminal such as a faucet and a shower.

Hot water is supplied from the hot water supply terminal, thereby reducing the hot water in storage tank 1. Then water is automatically supplied to tank 1 via water supply pipe 20a. Pipe 20a, tank 1, and hot water supply pipe 20b are connected to each other in this order, whereby hot water supply channel 20 is formed.

Hot water sensor 5 is disposed in hot water supply channel 20. In this embodiment, sensor 5 is provided to water supply pipe 20a; however, it can be provided to hot water supply pipe 20b instead. Hot water sensor 5 can be selected from, for instance, a flow rate sensor and a flow switch. When hot water is output from terminal 21, the foregoing structure allows sensor 5 to sense the flow of hot water in hot water supply pipe 20b, thereby sensing whether or not a supply of hot water has taken place. When hot water is output from terminal 21, the hot water in storage tank 1 decreases, so that water is supplemented to tank 1 via water supply pipe 20a. Sensing this flow of the water also allows sensor 5 to sense whether or not a supply of hot water has taken place.

In this embodiment, storage tank 1 and heat source 2 are connected together with pipes (10a, 10b), whereby heating circuit 10 is formed; however, the present invention is not limited to this structure, and the water in tank 1 can be heated with a different structure from what is discussed above. For instance, an electric heater disposed in tank 1 can be used as heat source 2, or a heat pump device is used as heat sources 2, and a discharge tube can be wound around an outer wall of tank 1. In this structure, a refrigerant of high temperature flows through the discharge tube and radiates heat to the water via the wall of tank 1, thereby heating the water in tank 1.

In this embodiment, water supply pipe 20a, storage tank 1, and hot water supply pipe 20b are connected to each other in this order, whereby hot water supply channel 20 is formed. However, the present invention is not limited to this structure. Channel 20 can be formed of a structure different from what is discussed above. For instance, the upper part and the lower part of tank 1 is connected to each other in an annular manner with pipes, so that a primary side circuit through which the hot water in tank 1 circulates. A secondary side channel (hot water supply channel 20) is formed independent of the primary side circuit for the water supplied from the water source to flow through it toward hot water supply terminal 21. On top of that, a hot water supply heat-exchanger is formed such that the hot water flowing through the primary side circuit exchanges heat with the water flowing through the secondary side channel. In other words, the hot water supplied from tank 1 and flowing through the primary side circuit heats the water flowing through the secondary side channel, thereby producing hot water. This structure allows storage tank 1 to be a closed circuit, thereby preventing a production of scales.

The foregoing structure allows supplying hot water supply terminal 21 with hot water stored in tank 1 or hot water heated by the hot water in tank 1.

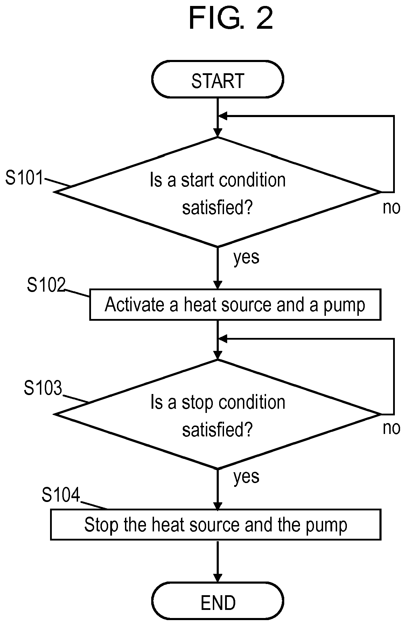

Controller 9 activates heat source 2 and pump 11 for carrying out the heating operation that heats the water in tank 1. This heating operation is detailed hereinafter. FIG. 2 is a flowchart for controller 9 to control the heating operation.

As FIG. 2 shows, controller 9 determines whether or not a start condition (detailed later) is satisfied (S101), and activates heat source 2 and pump 11 (S102) when the start condition is satisfied (branch YES of S101) for heating the water in tank 1. Controller 9 then controls an amount of water pumped into tank 1 by pump 11 and a temperature of discharged refrigerant from the compressor of heat source 2 such that a temperature of the water heated by heat source 2 rises to a given target temperature (e.g. 65 degrees). This temperature is sensed with temperature sensor 8 for sensing a temperature of the hot water output from heat source 2. Controller 9 then determines whether or not a stop condition of the heating operation is satisfied (S103), and stops heat source 2 and pump 11 when the stop condition is satisfied (branch YES of S103) for stopping the heating operation (S104).

The start condition for controller 9 to start the heating operation is that an amount of hot water in tank 1 decreases smaller than a given amount (start amount), and the stop condition for controller 9 to stop the heating operation is that an amount of hot water remaining in tank 1 increases greater than a given amount (stop amount).

Whether or not the amount of hot water in tank 1 satisfies the start amount, and whether or not the amount of hot water in tank 1 satisfies the stop amount can be determined by using temperature sensor 3 that senses a temperature of hot water in tank 1 and temperature sensor 4 that senses a temperature of water input to heat source 2. Because a decrease in the amount of hot water in tank 1 lowers the temperature which is sensed by sensor 3, and tank 1 filled up with hot water raises the temperature which is sensed by sensor 4. Here is another way: a calorie of the hot water stored in tank 1 is calculated based on the temperature sensed by sensor 3, and the foregoing determination can be carried out by using this calorie.

Controller 9 includes timer 6 that determines a present time, and setting section 7 that sets a time zone (refer to FIG. 1). Setting section 7 sets an operation cycle of hot water supply device 100. For instance setting section 7 sets one day as an operation cycle, and also sets a predetermined time zone in which a largest amount of hot water is used per unit time. This time zone is referred to as a second time zone T2. Other time zones such as first time zone T1 and third time zone T3 are set by setting section 7. These time zones are detailed later.

When controller 9 detects that a supply of hot water takes place by the end of second time zone T2 during the operation cycle (e.g. one day), controller 9 changes at least one of the start condition or the stop condition of the heating operation. This mechanism prevents a short or a surplus of hot water, thereby achieving hot water supply device 100 excellent in energy efficiency. The one day in this context is the operation cycle of device 100 and refers to consecutive 24 hours. The one day is not necessarily starting from 0:00 and ending at 24:00. In this embodiment, hot water supply device 100 employs the one day as the operation cycle that starts from 7:00 and ends at 7:00 next day. This operation cycle is set by setting section 7 of controller 9.

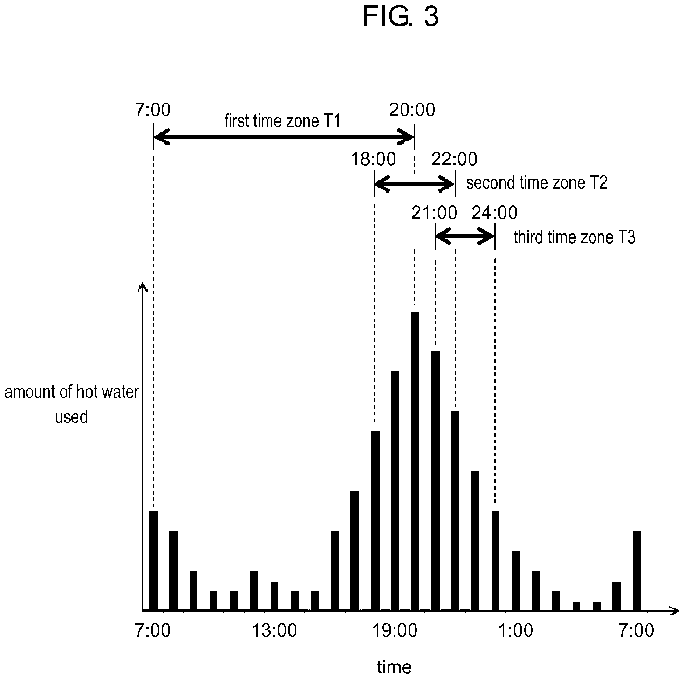

Each time zone set by setting section 7 is detailed hereinafter. FIG. 3 shows a general trend of amounts of hot water used with a lapse of time in a day, which is an operation cycle. The vertical axis represents a calorie of hot water used per hour delivered from tank 1. As FIG. 3 shows, large amounts of hot water are used from evening (e.g. 18:00) until night (e.g. 22:00). The heating operation is needed during this time zone for storing hot water to prevent a short in hot water. When users are not at home, the amount of hot water used decreases in this time zone, so that a surplus of hot water tends to occur. Hot water supply device 100 thus needs to carry out the heating operation depending on usage by the users, so that a short or a surplus of hot water can be prevented and hot water supply device 100 excellent in energy efficiency is obtainable.

To achieve the foregoing objective, controller 9 sets a time zone, during which a large amount of hot water is used per unit time in a day, as a given time zone (second time zone T2), and when a supply of hot water takes place from hot water supply terminal 21 by the end of second time zone T2, controller 9 changes the start condition, namely, a start amount of hot water, to a greater value. To be more specific, when a supply of hot water takes place, assume that the user is at home, and the heating operation is started although comparatively large amount of hot water remains in storage tank 1. This mechanism allows producing hot water quicker, so that a short in hot water can be prevented. The assumption of a user being at home causes to change the start condition of the heating operation, whereby heat source 2 is not operated uselessly and hot water supply device 100 excellent in energy efficiency can be obtained.

Second time zone T2 preferably includes a period in which the largest amount of hot water per unit time is consumed. For instance, in the example shown in FIG. 3, second time zone T2 is set such that it includes a period of 19:00 - 20:00 during which the largest amount of hot water per unit time is consumed. In this embodiment, setting section 7 sets second time zone T2 to a period of 18:00 - 22:00.

Second time zone T2 can be set in advance, or can be changed in response to an actual measured amount of hot water used by a user. In other words, second time zone T2 can be set when hot water supply device 100 is installed, or can be set in controller 9 directly by the user after the installation. After measuring a total amount of hot water used by the user with hot water sensor 5 and timer 6, second time zone T2 can be set automatically such that it includes a time period in which the largest amount of hot water per unit time is used.

In this description, the expression "when a supply of hot water takes place," refers to a case where hot water sensor 5 detects a supply of hot water, and a case where hot water sensor 5 detects that an amount of supplied hot water exceeds a given amount. The latter case, namely, the case where hot water sensor 5 detects that an amount of supplied hot water exceeds a given amount, is preferably applied to the expression "when a supply of hot water takes place". This definition allows making the assumption of the user being at home more accurately. To be more specific and for instance, in a case where a little amount of hot water is used in a day time, a large amount of hot water still remain in storage tank 1 in the busiest time zone starting from evening, so that a short in hot water hardly occurs. Hot water sensor 5 detects an amount of supplied hot water exceeding the given amount, and outputs this detection as "a supply of hot water takes place", then controller 9 can determine more accurately whether or not changes in the start condition and the stop condition are needed.

As FIG. 3 shows, the amount of hot water used decreases in the latter half of second time zone T2 and after time zone T2. Presence of a given amount of hot water in storage tank 1 thus often saves heating all the water in tank 1 during second time zone T2.

After second time zone T2 starts, or when a given time lapses after the start of time zone T2, controller 9 in accordance with the embodiment changes the stop condition such that the stop amount of hot water is changed to a smaller amount. In other words, controller 9 ends the heating operation although an amount of hot water remaining in tank 1 is relatively small, whereby a surplus of hot water can be prevented. As a result, useless operations of heat source 2 and pump 11 can be eliminated, and a loss in heat dissipation can be reduced. Hot water supply device 100 excellent in energy efficiency can be thus obtained.

Setting section 7 of controller 9 sets third time zone T3 that starts and ends later than second time zone T2. In third time zone T3, a smaller amount of hot water is used than in second time zone T2. The stop condition of the heating operation is changed in this third time zone T3. In this embodiment, third time zone T3 is set to 21:00 - 24:00.

In this embodiment, setting section 7 of controller 9 sets three time zones in an operation cycle (i.e. one day). The three time zones are first time zone T1, second time zone T2 that starts and ends later than first time zone T1 and a greater amount of hot water is used than in first time zone T1, and third time zone T3 that starts and ends later than second time zone T2 and a smaller amount of hot water is used than in second time zone T2.

First, second, and third time zones T1, T2, and T3 have lengths of time equal to each other or different from each other. They can overlap with each other in parts. In this embodiment, as shown in FIG. 3, setting section 7 of controller 9 sets first time zone T1 to 7:00 - 20:00, second time zone T2 to 18:00 - 22:00, and third time zone T3 to 21:00 - 24:00. These time zones can be set in advance, or they can be changed automatically by controller 9 in response to an amount of hot water used.

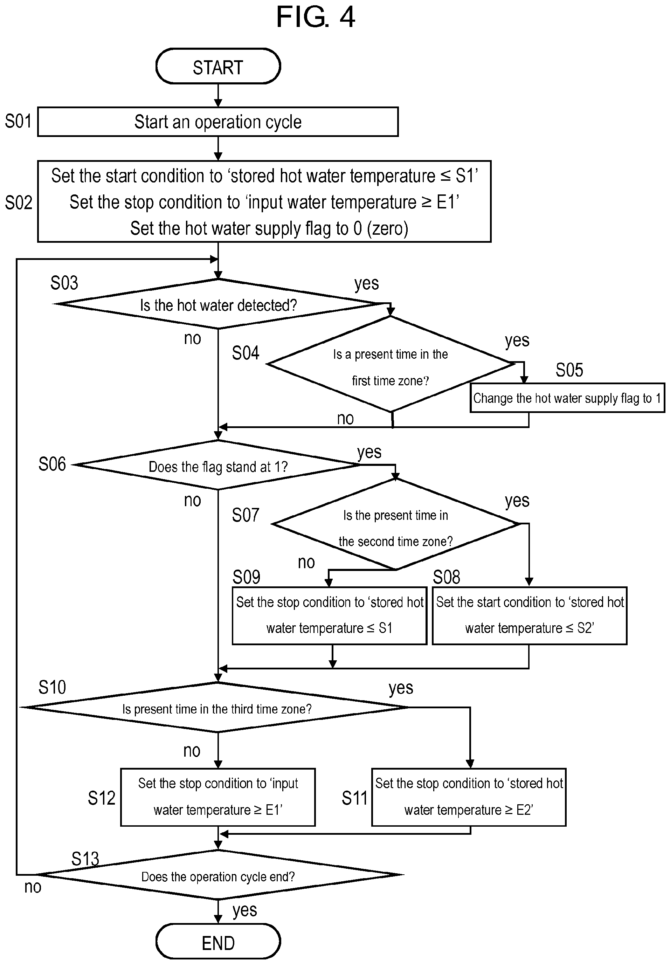

Next, a change control over the start condition and the stop condition of the heating operation is demonstrated. FIG. 4 is a flowchart of the change control over the start condition and the stop condition of the heating operation.

Controller 9 sets the start condition and the stop condition according to the change control shown in FIG. 4, and carries out the start and the stop of the heating operation shown in FIG. 2.

In this embodiment, a determination of whether or not the start condition (start amount of hot water) is satisfied is done based on a hot water temperature sensed by sensor 3. In a case where hot water is stored from the top of tank 1, in particular, sensing a given temperature with sensor 3 indicates that hot water of higher temperature than the given temperature is stored above sensor 3 in tank 1. Use of the hot water temperature thus allows determining whether or not the start amount is satisfied.

In this embodiment, a determination of whether or not the stop condition (stop amount of hot water) is satisfied is done based on an input water temperature sensed by sensor 4. An input water temperature higher than a given temperature indicates that water of higher temperature than the given temperature is stored in tank 1. Use of the input water temperature thus allows determining whether or not the stop amount is satisfied.

As FIG. 4 shows, when the operation cycle starts (S01), controller 9 sets 'stored hot-water temperature ≤ first start temperature S1' as the start condition of the heating operation, and sets 'input water temperature ≥ first stop temperature E1' as the stop condition (S02). The start condition and the stop condition set in step S02 are regular conditions set for starting and stopping the heating operation. First start temperature S1 is, for example, 45°C, and first stop temperature E1 is, for example, 55°C. In step S02, controller 9 sets a hot water supply flag, which determines whether or not a supply of hot water takes place, to 0 (zero). Flag 0 indicates that a supply of hot water in a given amount did not take place, and flag 1 indicates that a supply of hot water in a given amount has taken place.

Next, controller 9 determines whether or not sensor 5 detects a supply of hot water (S03.). When the supply of hot water is detected (branch YES of S03), controller 9 determines, with the aid of timer 6, whether or not a present time is in first time zone T1 (S04). In the case of the present time falls within first time zone T1 (branch YES of S04), controller 9 changes the hot water supply flag from 0 to 1. If the present time falls out of first time zone T1 (branch NO of S04), the process moves on to the next step without changing the flag.

Then controller 9 refers to a value of the hot water supply flag, and determines whether or not the flag stands at 1 (S06). In the case of the flag showing 0 (zero) (branch NO of S06), the process moves on to step S10. When the flag stands at 1 (YES branch of S06), controller 9 determines, with the aid of timer 6, whether or not the present time falls within second time zone T2 (S07).

In the case where the present time is not in second time zone T2 (branch NO of S07), controller 9 sets the start condition of the heating operation to 'hot water temperature ≤ first start temperature S1', namely, this condition is the regular condition set in step S02. Then the process moves on to the next step (S09). In the case where the present time is in second time zone T2 (branch YES of S07), controller 9 changes the start condition (S08). To be more specific, the temperature of hot water (i.e. the start condition of the heating operation) is raised from first start temperature S1 to second start temperature S2, which is for instance 50°C. When a supply of hot water takes place in first time zone T1, this preparation allows starting the heating operation in second time zone T2 although tank 1 contains relatively a large amount of hot water. In other words, the heating operation is started earlier to prevent a short in hot water.

Next, controller 9 determines whether or not the present time is in third time zone T3 with the aid of timer 6 (S10). In the case where the present time is not in third time zone T3 (branch NO of S10), controller 9 sets the stop condition to 'input water temperature ≥ first stop temperature E1' (S12). In other words, the process moves on to step S13 maintaining the regular condition set in step S02.

In the case of the present time being in third time zone T3 (branch YES of S10), controller 9 changes the stop condition of the heating operation (S11). To be more specific, the stop condition 'input water temperature ≥ first stop temperature E 1' is changed to a stop condition 'stored hot water temperature ≥ second stop temperature E2' (S11). Second stop temperature E2 (e.g. 60°C) is preferably equal to or higher than first stop temperature E1. A temperature of input water sensed with sensor 4 sometime lowers more or less during a flow in input water pipe 10a. Considering this temperature decrease, second stop temperature E2, which is a comparison target for a stored hot water temperature sensed with sensor 3, is preferably set to equal to or higher than first stop temperature E1.

A temperature changes slower in the input water than in the stored hot water when the heating operation is carried out. A criterial temperature to determine whether or not the stop condition is satisfied is thus changed from the input water temperature to the stored hot water temperature (S11), whereby a change in temperature of the hot water undergoing the heating operation can be sensed more quickly. This mechanism allows halting the heating operation although an amount of hot water produced by the heating operation is relatively small. In other words, the heating operation is stopped earlier, thereby preventing a surplus of hot water. The energy efficiency resultantly improves.

Next, controller 9 determines with the aid of timer 6 whether or not the present time is an end time of the operation cycle (S13). In the case of the present time being not the end time (branch NO of S13), controller 9 returns to step S03 and continues the change control over the start condition and the stop condition. In the case where controller 9 determines that the present time is the end time (branch YES of S13), controller 9 ends the change control.

In time zones other than the set time zones, the heating operation is carried out according to the regular condition.

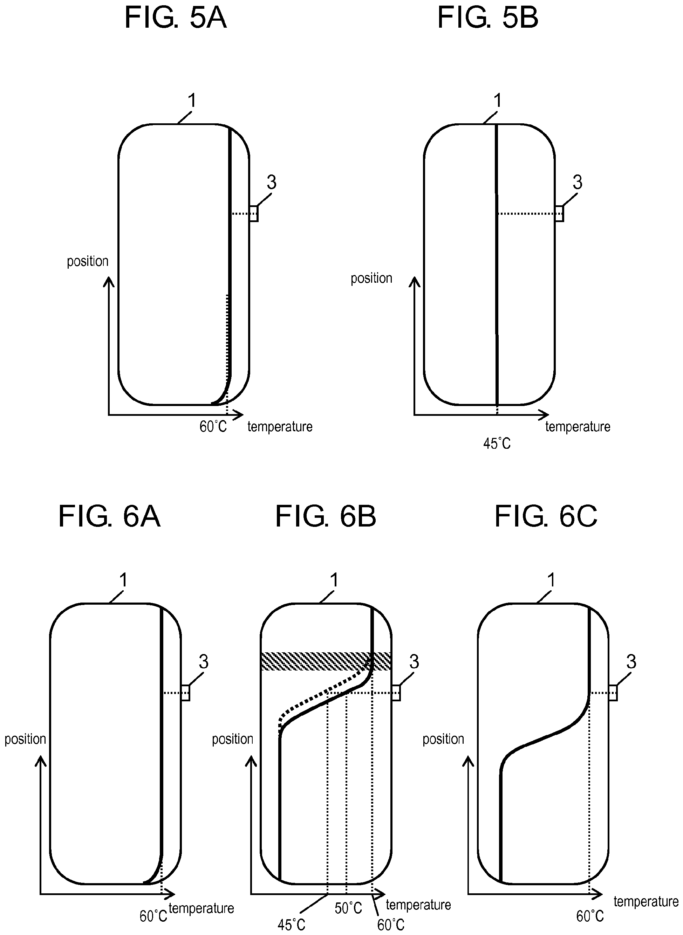

Here is a description of a temperature distribution of hot water stored in tank 1 under the heating operation that incorporates the change control discussed above. FIGS. 5A and 5B schematically illustrate a temperature distribution of hot water stored in storage tank 1 when the heating operation is carried out based on the regular condition set in step S02 (refer to FIG. 4) in accordance with the first embodiment. FIGS. 6A - 6C schematically illustrate a temperature distribution of hot water in storage tank 1 when a supply of the hot water takes place in the first embodiment.

As FIGS. 5A and 5B show, the heating operation carried out based on the regular condition allows storing the hot water heated by heat source 2 to a given temperature (e.g. 65°C) in tank 1 from a top section of storage tank 1. FIG. 5A illustrates a state where all the hot water in tank 1 is heated to a temperature equal to or higher than the given temperature, in other words, this state is immediately after the heating operation. If no supply of hot water takes place and this state is maintained, the temperature of the hot water in tank 1 lowers almost uniformly due to heat radiation.

As FIG. 5B shows, when the stored hot water temperature becomes first start temperature S1 (e.g. 45°C), heat source 2 is activated for starting the heating operation. This mechanism allows storing again the hot water heated to a target temperature from the top section of tank 1. In other words, when no supply of hot water takes place, the state shown in FIG. 5A and the state shown in FIG. 5B are repeated, so that the heating operation based on the regular condition functions as a keep-warm operation for storage tank 1.

On the other hand, when a supply of hot water takes place at hot water supply terminal 21, water is supplemented in an amount corresponding to a consumed amount of hot water, and the water is input from a lower section of tank 1. In storage tank 1, a temperature layer with a higher temperature at a higher part is maintained while a total amount of hot water decreases. The amount of hot water used grows unbalanced in evening and night as discussed previously. A sufficient amount of hot water is needed in this time zone in order to prevent a short in hot water.

This embodiment thus sets second time zone T2 in which a large amount of hot water per unit time is used, and when a supply of hot water takes place by the end of second time zone T2, it is assumed that a user is at home in that day. In this case, although tank 1 stores hot water in a greater amount than an amount specified by the regular condition, the heating operation is started in order to reserve an enough amount of hot water for second time zone T2. To be more specific, first time zone T1 that starts and ends earlier than time zone T2 is set, and if a supply of hot water takes place in first time zone T1, then the heating operation is started in second time zone T2 although the stored hot water temperature is relatively high, so that a short in hot water can be prevented.

In the latter half of second time zone T2 and after the laps of second time zone T2, an amount of hot water used per unit time decreases, so that storage tank 1 is allowed to store a smaller amount of hot water. Hot water supply device 100 in accordance with this embodiment changes the stop condition of the heating operation after the start of second time zone T2. To be more specific, device 100 sets third time zone T3 that starts and ends later than time zone T2, and a smaller amount of hot water is consumed in third time zone T3. In the case where the heating operation is carried out during third time zone T3, the heating operation is stopped although tank 1 stores relatively small amount of hot water.

As FIG. 6A shows, immediately after the stop of the heating operation, the temperatures of all the hot water in tank 1 are equal to or higher than a given temperature. If a supply of hot water takes place in this state, the hot water in the upper section of tank 1 is firstly used, and water in the same amount of consumed hot water flows into tank 1 from the lower section. This mechanism forms a temperature gradient in tank 1 as shown in FIG. 6B.

During the heating operation under the regular condition, heat source 2 is not activated until sensor 3 senses that the temperature of stored hot water lowers to first start temperature S1 (e.g. 45°C). On the other hand, as discussed previously, the condition is changed such that when a supply of hot water takes place at hot water supply terminal 21 by the end of second time zone T2, heat source 2 is activated at the time when sensor 3 senses that the temperature of hot water lowers to second start temperature S2 (e.g. 50°C). As FIG. 6B shows, although an amount of stored hot water, of which temperature is equal to or higher than 60°C, represented by a hatched portion is larger than a regular amount, the heating operation is carried out. As a result, a short in hot water can be prevented. In FIG. 6B, a solid line represents a temperature distribution when sensor 3 senses 50°C, and a broken line represents a temperature distribution when sensor 3 senses 45°C.

If the stop condition is changed to 'stored hot water temperature ≥ second stop temperature E2' (e.g. 60°C), the heating operation is stopped at the time when sensor 3 senses that the temperature of stored hot water rises to second stop temperature E2 as FIG. 6C shows. Comparing with FIG. 6A where the heating operation ends according to the regular condition, FIG. 6C shows that the heating operation ends although tank 1 stores a small amount of hot water. As a result, useless heating operations can be prevented, and heat dissipation loss from tank 1 can be reduced.

As discussed above, hot water supply device 100 in accordance with the first embodiment detects whether or not a supply of hot water takes place, thereby assuming a user being at home or not at home. In the case of the user being not at home, device 100 prevents useless heating operation for reducing a power consumption as well as a loss due to heat dissipation. In the case of the user being at home, device 100 carries out the heating operation depending on a usage pattern of hot water, thereby preventing a short in hot water and avoiding leftover of large amount of hot water in storage tank 1. As a result, hot water supply device 100 excellent in usability and energy efficiency is obtainable.

In this embodiment, the temperature (of stored hot water) sensed with sensor 3 is used for determining whether or not the start condition is satisfied, and the temperature (of input water) sensed with sensor 4 and the temperature of stored hot water are used for determining whether or not the stop condition is satisfied. However, these determinations can be done by other methods.

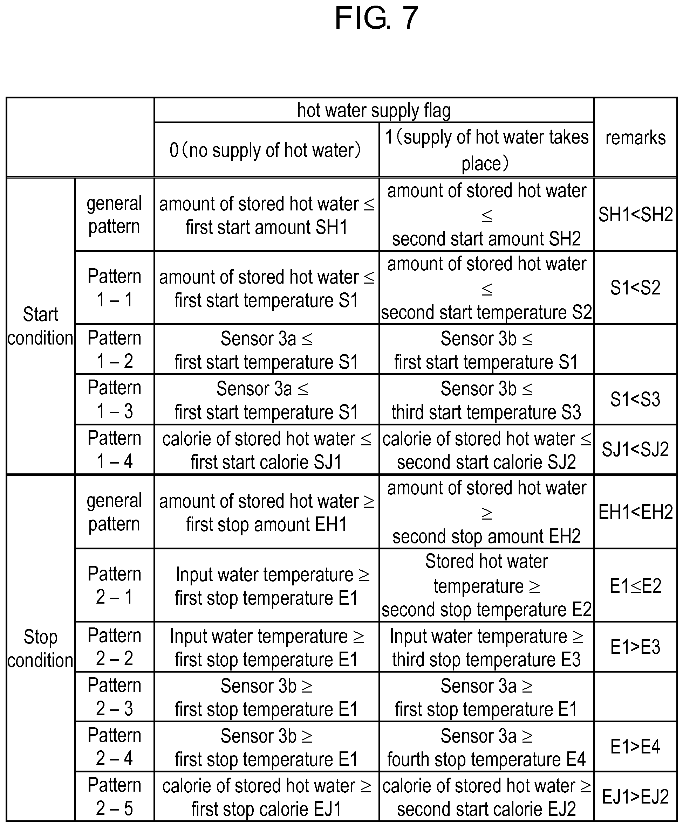

FIG. 7 shows examples of the start condition and the stop condition in accordance with the first embodiment. This embodiment employs pattern 1 - 1 shown in FIG. 7 for determining whether or not the start condition is satisfied, and employs pattern 2 - 1 shown in FIG. 7 for the stop condition.

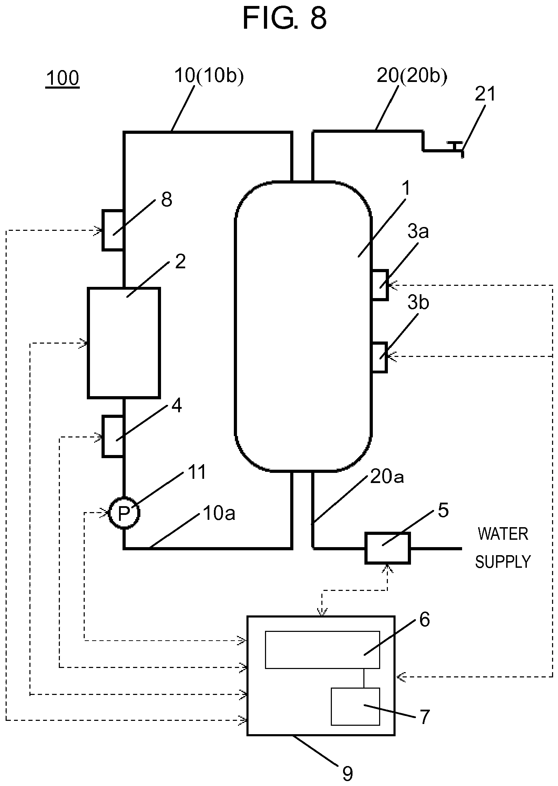

FIG. 8 shows another structure of hot water supply device 100 in accordance with the first embodiment. As FIG.8 shows, sensor 3 is formed of multiple sensors 3a and 3b disposed along the longitudinal direction of tank 1. This structure allows changing the start condition by using the temperatures sensed with different sensors 3a and 3b before and after the change.

Depending on an amount of hot water consumed, use of multiple sensors 3a and 3b in hot water supply device 100 allows changing sensor 3a to sensor 3b or vice versa to be referred to. This structure achieves a more accurate control of an amount of hot water produced by the heating operation than that of the structure employing a single sensor 3. As a result, a short or a surplus of hot water can be prevented, and hot water supply device 100 more excellent in energy efficiency is obtainable.

As FIG. 8 shows, multiple sensors 3a and 3b are disposed along the longitudinal direction of tank 1, and when pattern 1 - 1 is employed as the start condition, sensor 3b disposed lower than sensor 3a is preferably used.

When pattern 1 - 2 is employed and hot water supply flag stands at 0 (zero), the temperature sensed with upper sensor 3a is compared with first start temperature S1. When flag stands at 1, the temperature sensed with lower sensor 3b is compared with second start temperature S2. When a supply of hot water takes place at hot water supply terminal 21, the same amount of water is supplied into tank 1 from the lower section while a temperature layer formed of hot water of higher temperature remains in the upper section of tank 1, although the total amount of hot water store in tank 1 decreases. This mechanism allows starting the heating operation although tank 1 stores comparatively large amount of hot water. At this time, as pattern 1 - 3 indicates, third start temperature S3 that is used for comparison after the change of the start condition can be set higher than first start temperature S1.

The start condition can be determined based on a calorie of the stored hot water in tank 1 as pattern 1-4 indicates. To be more specific, 'calorie of stored hot water ≤ first start calorie SJ1' is set as the start condition when hot water supply flag stands at 0 (zero), and 'calorie of stored hot water ≤ second start calorie SJ2' is set as the start condition when hot water supply flag stands at 1, where SJ1 < SJ2. In other words, when the general patterns of the start condition are satisfied (i.e. when an amount of hot water satisfies the given relation), the amount of stored hot water can be calculated or estimated by using the temperature or calorie of the stored hot water before determining whether or not the heating operation is needed.

The stop condition can be determined by using only an input water temperature as pattern 2 - 2 indicates. To be more specific, 'input water temperature ≥ first stop temperature E1' is set as the stop condition when the flag stands at 0 (zero), and 'input water temperature ≥ third stop temperature E3', where E1 > E3, is set as the stop condition when the flag stands at 1. When the input water temperature arrives at third stop temperature E3 that is lower than first stop temperature E1, the heating operation is ended while tank 1 stores a relatively small amount of hot water, so that a surplus of hot water can be prevented.

As FIG. 8 shows, multiple sensors 3a and 3b are disposed along the longitudinal direction of tank 1. This structure allows changing the stop condition by using the temperatures sensed with different sensors 3a and 3b before and after the change.

As pattern 2 - 3 indicates, the temperature sensed with lower sensor 3b is compared with first stop temperature E1 when the hot water supply flag stands at 0 (zero), and the temperature sensed with upper sensor 3a is compared with first stop temperature E1 when the flag stands at 1. This mechanism allows stopping the heating operation although tank 1 stores a relatively small amount of hot water. At this time, as pattern 2 - 4 indicates, fourth stop temperature E4 that is used for comparison after the stop condition is changed can be set lower than first stop temperature E1.

The stop condition can be determined by using a calorie of the stored hot water in tank 1 as pattern 2 - 5 indicates. To be more specific, 'calorie of stored hot water ≥ first stop calorie EJ1' is set as the stop condition when hot water supply flag stands at 0 (zero), and 'calorie of stored hot water ≥ second stop calorie EJ2' is set as the stop condition when hot water supply flag stands at 1, where EJ1 > EJ2. In other words, when the general patterns of the stop condition are satisfied, the amount of stored hot water can be calculated or estimated by using the temperature or calorie of the stored hot water before determining whether or not the heating operation is needed.

### SECOND EXEMPLARY EMBODIMENT

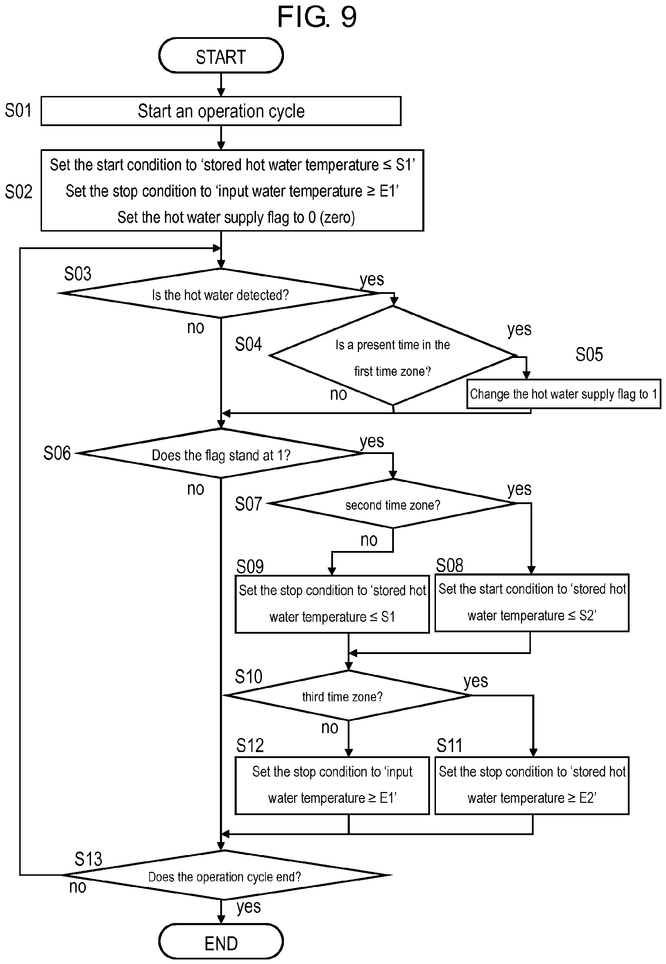

FIG. 9 is a flowchart of a change control over a start condition and a stop condition of a heating operation in hot water supply device 100 in accordance with the second embodiment. Similar elements to those in the first embodiment have the same reference marks and the detailed descriptions thereof are omitted.

As FIG. 9 shows, the change control used in this embodiment changes the stop condition of the heating operation when a hot water supply flag stands at 1 (branch YES of S06). To be more specific, when the flag stands at 1 and the present time is in third time zone T3, the stop condition of the heating operation is changed (S11). A change pattern can be selected from FIG.7.

In the case of present time not in third time zone T3 (branch NO of S10), the stop condition is not changed (S12). When the flag stands at 1 (branch NO of S6), the process moves on to step S13 without determining whether or not the present time is in third time zone T3.

The foregoing mechanism allows the heating operation (keep-warm operation) to be kept under the regular condition when a supply of hot water does not take place (i.e. the flag stands at 0), so that heat source 2 can work in the most efficient manner. On the other hand, when a supply of hot water takes place (i.e. the flag stands at 1), the stop condition of the heating operation is changed for reducing useless operations of heat source 2 and preventing a surplus of hot water. As a result, hot water supply device 100 excellent in operability and energy efficiency is obtainable.

As discussed previously, hot water supply device 100 in a first aspect comprises the following structural elements:
storage tank 1 for storing hot water;
heat source 2 for heating the hot water in tank 1;
a supply channel through which the hot water in tank 1 or hot water heated by the hot water in tank 1 flows; and
controller 9 for carrying out a heating operation to heat the hot water in tank 1.

Controller 9 starts the heating operation when an amount of the hot water in tank 1 decreases equal to or smaller than a first start amount, and ends the heating operation when the amount of the hot water in tank 1 rises equal to or greater than the first start amount. On top of that, when a supply of hot water takes place by the end of a time zone in which a largest amount of hot water per unit time is used, controller 9 changes an amount of hot water stored in tank 1 from the first start amount to a second start amount greater than the first one.

This mechanism allows assuming whether or not the user is at home depending on an execution of a supply of hot water by the end of the time zone in which the largest amount of hot water per unit time is consumed. When the supply of hot water takes place, the start condition is changed such that a greater amount of hot water is stored in tank 1 before the heating operation starts. This preparation allows starting the heating operation earlier than that before the change, so that hot water can be produced earlier. As a result, a short in hot water can be prevented even during the time zone in which a large amount of hot water is consumed. On top of that, the start condition is changed to increase the amount of hot water stored in tank 1 before starting the heating operation only when it is assumed that the user needs a supply of hot water. This change allows preventing a surplus of hot water, and the hot water supply device excellent in energy efficiency is obtainable.

During an ordinary operation, controller 9 starts or stops heat source 2 to keep an amount of hot water stored in tank 1 within a given range. In general, supplies of hot water take place frequently from evening (e.g. 18:00) to night (e.g. 22:00), and consumptions of hot water are localized in these several hours. The time zone of 18:00 - 20:00 is set as a given time zone, and when a supply of hot water takes place by the end of this given time zone (i.e. greatest consumption time zone) in one operation cycle (e.g. one day), it is assumed that a user is at home on that day. This assumption allows foreseeing an increase of an amount of hot water to be consumed (load of hot water supply), so that the start condition is changed such that the heating operation starts earlier than that in the ordinary operation. As a result, the heating operation can be started in accordance with a usage pattern of the user, and a short in hot water can be prevented, and yet, hot water supply device 100 excellent in energy efficiency is obtainable.

The "one day" used as one operation cycle in this description is not necessarily defined as 0:00 - 24:00. For instance, it can starts at 7:00 and ends at 7:00 next day. In other words, consecutive 24 hours can be defined as one day, then the start and end times are not limited to the foregoing instance. In the case of assuming whether or not a user being at home based on an execution of a supply of hot water, the operation cycle preferably employs one day starting from morning (e.g. anytime during 6:00 - 8:00) and ending in the morning next day (e.g. anytime during 6:00 - 8:00).

In addition to the first aspect discussed above, controller 9 of hot water supply device 100 in a second aspect is configured to change an amount of hot water when the heating operation is ended after a laps of the given time zone to a second stop amount smaller than the first stop amount.

As discussed above, a large amount of hot water is used for several hours from evening to night among others, and an amount of hot water to be stored in storage tank 1 can be reduced after the given time zone because a smaller amount of hot water will be used after the given time zone.

As the foregoing second aspect proves, when the heating operation is ended, an amount of hot water in tank 1 becomes relatively small, so that the heating operation ends earlier, which prevents a surplus of hot water. As a result, the operation time of heat source 2 becomes shorter, and the energy efficient of hot water supply device 100 improves. Since the surplus of hot water is prevented, heat dissipation loss decreases, so that the energy efficiency can further improve.

In addition to the first aspect, controller 9 of hot water supply device 100 in a third aspect is configured to change an amount of hot water to a second stop amount smaller than the first one stop amount when a supply of hot water takes place by the end of the given time zone and the heating operation is ended after a laps of the given time zone.

When the supply of hot water takes place, the user is assumed to be at home, and the start condition of the heating operation is changed to start the heating operation earlier. Storage tank 1 thus stores a greater amount of hot water than a predetermined amount. On the other hand, when no supply of hot water takes place, the user is assumed not to be at home, and the start condition is not changed. The temperature of stored hot water in tank 1 lowers as a whole. This phenomenon becomes more conspicuous when no heating operation is carried out during the given time zone. It can be thus assumed that at the end of the given time zone, storage tank 1 stores a smaller amount of hot water if no supply of hot water takes place by the end of the given time zone than if a supply of hot water takes place.

In the case where no supply of hot water takes place by the end of the given time zone, an amount of hot water is not changed at the time when the heating operation is ended. On the other hand, when a supply of hot water takes place by the end of the given time zone, namely, when tank 1 is assumed to store a large amount of hot water, the amount of hot water is relatively reduced at the time when the heating operation is ended. As a result, the heating operation is ended depending on a usage pattern of the user, and a surplus of hot water can be prevented, whereby hot water supply device 100 excellent in energy efficiency can be obtained.

In addition to the second or the third aspect, hot water supply device 100 in a fourth aspect includes sensor 3 for sensing a temperature of hot water stored in tank 1, and sensor 4 for sensing a temperature of input water flowing into heat source 2. Controller 9 determines, based on the temperature of the stored hot water, whether an amount of hot water stored in tank 1 decreases equal to or smaller than a first start amount or equal to or smaller than a second start amount. Controller 9 also determines, based on the temperature of the input water, whether the amount of stored hot water in tank 1 increases equal to or greater than a first stop amount or equal to or greater than a second stop amount.

The foregoing structure allows sensor 3 to sense the temperature of hot water stored in tank 1 for determining an amount of hot water in tank 1, and also allows estimating with sensor 4 a temperature of the hot water as a whole in storage tank 1. The first start amount, second start amount, first stop amount, and second stop amount can be thus determined with each one of the sensors provided to hot water supply device 100, thereby preventing a short in hot water and achieving an excellent energy efficiency in device 100.

In addition to the second or the third aspect, hot water supply device 100 in a fifth aspect includes sensor 3 for sensing a temperature of hot water stored in tank 1, and sensor 4 for sensing a temperature of input water flowing into heat source 2. Controller 9 determines, based on the temperature of the stored hot water, whether an amount of hot water stored in tank 1 decreases equal to or smaller than the first start amount, or equal to or smaller than the second start amount. Controller 9 also determines, based on the temperature of the input water, whether or not the amount of the stored hot water in tank 1 increases equal to or greater than the first stop amount, and determines, based on the temperature of hot water stored in tank 1, whether or not the amount of the stored hot water increases equal to or greater than the second stop amount.

The foregoing structure allows determining whether or not the amount of the stored hot water exceeds the first stop amount with one of the sensors, and determining whether or not the amount of the stored hot water exceeds the second stop amount with another one of the sensors. When the heating operation is carried out, the temperature of the stored hot water starts changing sooner than the temperature of the input water. Use of sensor 3, which senses a temperature of stored hot water, for determining whether or not the amount of stored hot water exceeds the second stop amount allows ending the heating operation earlier to prevent a surplus of hot water. As a result, hot water supply device 100 excellent in energy efficiency is obtainable.

In addition to the second or the third aspect, hot water supply device 100 in a sixth aspect includes sensor 3 that senses the temperature of hot water stored in tank 1. Sensor 3 includes multiple sensors provided to tank 1 along the longitudinal direction. Based on the temperature sensed with a first sensor of the multiple sensors, controller 9 determines whether or not the amount of the stored hot water in tank 1 is equal to or smaller than the first start amount, and based on the temperature sensed with a second sensor disposed above the first sensor, controller 9 determines whether or not the amount of the stored hot water is equal to or smaller than the second start amount.

Besides the description of the foregoing sixth aspect, controller 9 in a seventh aspect includes the multiple temperature sensors as sensor 3 for sensing the temperature of the stored hot water. Based on the temperature sensed with the first sensor of the multiple sensors, controller 9 determines whether or not the amount of the stored hot water exceeds the first stop amount, and based on the temperature sensed with the second sensor disposed above the first one, controller 9 determines whether or not the stored hot water in tank 1 exceeds the second stop amount.

Since the multiple temperature sensors are provided to storage tank 1 as sensor 3 along the longitudinal direction, the foregoing structure allows respective sensors to sense temperatures different from each other. The temperature sensed with a sensor disposed at a relatively higher position changes quicker than the temperature sensed with another sensor disposed at a relatively lower position. The amount of hot water stored in tank 1 can be thus determined based on a difference between temperatures sensed with different sensors disposed along the longitudinal direction of tank 1.

In conclusion, multiple temperature sensors are disposed on the surface of tank 1, and use of these sensors for different tasks allows determining the first start amount, second start amount, first stop amount, and second stop amount.

In an eighth aspect, controller 9 is employed in hot water supply device 100 that includes storage tank 1 for storing hot water, heat source 2 for heating the hot water in tank 1, a supply channel through which the hot water in tank 1 or hot water heated by the hot water in tank 1 flows. Controller 9 carries out the heating operation for heating the hot water in tank 1. To be more specific, controller 9 starts the heating operation when an amount of hot water stored in tank 1 decreases not greater than the first start amount, and stops the heating operation when the amount of hot water in tank 1 increases not smaller than the first stop amount. On top of that, in the case where a supply of hot water takes place during a given time zone, in which the largest amount of hot water per unit time is consumed, within one operation cycle, controller 9 changes the amount of hot water stored in tank 1 to the second start amount greater than the first one.

This mechanism allows carrying out the heating operation depending on a usage pattern of a user, thereby preventing a short in hot water and obtaining controller 9 that achieves excellent energy efficiency in hot water supply device 100.

As discussed previously, the present invention advantageously prevents a short in hot water, and achieves excellent energy efficiency, so that the present invention is applicable to home-use and industrial-use hot water supply devices. On top that, the present invention is also applicable to controllers to be employed in those hot water supply devices.

## Claims

1. A controller (9) to be used in a hot water supply device (100) with a storage tank (1) for storing hot water, a heat source (2) for heating the hot water in the storage tank (1) and a supply channel (20) through which the hot water in the storage tank (1) or hot water heated by the hot water in the storage tank (1) flows, the controller (9) comprising a timer (6) for determining a present time and a setting section (7) for setting a time zone,
wherein the controller (9) is configured to carry out a heating operation for heating the hot water in the storage tank (1),
wherein the controller (9) is to start the heating operation when an amount of the hot water in the storage tank (1) becomes equal to or smaller than a first start amount of hot water, and to stop the heating operation when the amount of the hot water in the storage tank (1) becomes equal to or greater than a first stop amount of hot water,
**characterized in that** the controller is to change the amount of the hot water in the storage tank (1) before the start of the heating operation to a second start amount of hot water greater than the first start amount of hot water when a supply of hot water takes place by an end of a given time zone, in which a largest amount of hot water per unit time is consumed, within an operation cycle,
wherein the given time zone can be set
(i) when the hot water supply device (100) is installed,
(ii) in the setting section (7) directly by the user after the hot water supply device (100) is installed, or
(iii) automatically after measuring a total amount of hot water used by the user with the hot water sensor (5) and the timer (6).

2. A hot water supply device (100) comprising:
a storage tank (1) for storing hot water;
a heat source (2) for heating the hot water in the storage tank (1);
a supply channel (20) through which the hot water in the storage tank (1) or hot water heated by the hot water in the storage tank (1) flows; and
a controller (9) according to claim 1.

3. The hot water supply device (100) according to claim 2, wherein after a lapse of the given time zone, the controller (9) changes the amount of the hot water in the storage tank (1) at an end of the heating operation to a second stop amount of hot water smaller than the first stop amount of hot water.

4. The hot water supply device (100) according to claim 2, wherein the controller (9) changes the amount of the hot water in the storage tank (1) at an end of the heating operation to a second stop amount of hot water smaller than the first stop amount of hot water when a supply of hot water takes place by an end of the given time zone and yet after a lapse of the given time zone.

5. The hot water supply device (100) according to claim 3 or 4, further comprising a temperature sensing section for sensing a temperature of the hot water stored in the storage tank (1), and another temperature sensing section for sensing a temperature of input hot water flowing into the heat source (2),
wherein the controller (9) determines based on the temperature of the stored hot water whether the amount of the hot water in the storage tank (1) becomes equal to or smaller than the first start amount of hot water or becomes equal to or smaller the second start amount of hot water, and also determines based on the temperature of the input hot water whether the amount of the hot water stored in the storage tank (1) becomes equal to or greater than the first stop amount of hot water or becomes equal to or greater than the second stop amount of hot water.

6. The hot water supply device (100) according to claim 3 or 4, further comprising a temperature sensing section for sensing a temperature of the hot water stored in the storage tank (1), and another temperature sensing section for sensing a temperature of input hot water flowing into the heat source (2),
wherein the controller (9) determines based on the temperature of the stored hot water whether the amount of the hot water in the storage tank (1) becomes equal to or smaller than the first start amount of hot water or becomes equal to or smaller than the second start amount of hot water, also determines based on the temperature of the input hot water whether the amount of the hot water stored in the storage tank (1) becomes equal to or greater than the first stop amount of hot water, and yet determines based on the temperature of the stored hot water whether the amount of the hot water stored in the storage tank (1) becomes equal to or greater than the second stop amount of hot water.

7. The hot water supply device (100) according to claim 3 or 4, further comprising a temperature sensing section for sensing a temperature of the hot water stored in the storage tank (1), wherein the temperature sensing section includes a plurality of temperature sensors (3) disposed along a longitudinal direction of the storage tank (1), and the controller (9) determines whether or not the amount of the hot water in the storage tank (1) is equal to or smaller than the first start amount of hot water based on a temperature sensed with a first temperature sensor (3a) of the plurality of temperature sensors (3), and determines whether or not the amount of the hot water in the storage tank (1) is equal to or smaller than the second start amount of hot water based on a temperature sensed with a second temperature sensor (3b) disposed above the first temperature sensor (3a).

8. The hot water supply device (100) according to claim 7, wherein the controller (9) determines based on the temperature sensed with the first temperature sensor (3a) of the plurality of temperature sensors (3) whether or not the amount of the hot water in the storage tank (1) is equal to or greater than the first stop amount of hot water, and determines based on the temperature sensed with the second temperature sensor (3b) disposed above the first temperature sensor (3a) whether or not the amount of the hot water in the storage tank (1) is equal to or greater than the second stop amount of hot water.

## Patentansprüche

1. Steuervorrichtung (9) zur Verwendung in einer Warmwasserversorgungsvorrichtung (100) mit einem Speicherbehälter (1) zum Speichern warmen Wassers, einer Wärmequelle (2) zum Erwärmen des warmen Wassers in dem Speicherbehälter (1) und einem Zufuhrkanal (20), durch den das warme Wasser in dem Speicherbehälter (1) oder durch das warme Wasser in dem Speicherbehälter (1) erwärmtes warmes Wasser fließt, wobei die Steuervorrichtung (9) einen Zeitgeber (6) zum Bestimmen einer aktuellen Zeit und einen Einstellteil (7) zum Einstellen eines Zeitbereichs umfasst,
wobei die Steuervorrichtung (9) ausgelegt ist, einen Erwärmungsvorgang zum Erwärmen des warmen Wassers in dem Speicherbehälter (1) auszuführen,
wobei die Steuervorrichtung (9) den Erwärmungsvorgang beginnen soll, wenn eine Menge des warmen Wassers in dem Speicherbehälter (1) gleich oder kleiner wird als eine erste Startmenge an warmem Wasser, und den Erwärmungsvorgang anhalten soll, wenn die Menge des warmen Wassers in dem Speicherbehälter (1) gleich oder größer wird als eine erste Stoppmenge an warmem Wasser,
**dadurch gekennzeichnet, dass** die Steuervorrichtung innerhalb eines Betriebszyklus die Menge des warmen Wassers in dem Speicherbehälter (1) vor dem Beginn des Erwärmungsvorgangs auf eine zweite Startmenge an warmem Wasser ändern soll, die größer ist als die erste Startmenge an warmem Wasser, wenn die Zufuhr an warmem Wasser zu einem Ende eines gegebenen Zeitbereichs stattfindet, in dem eine größte Menge an warmem Wasser pro Zeiteinheit verbraucht wird,
wobei der gegebene Zeitbereich eingestellt werden kann:
(i) wenn die Warmwasserversorgungsvorrichtung (100) installiert wird,
(ii) im Einstellteil (7) direkt durch den Benutzer, wenn die Warmwasserversorgungsvorrichtung (100) installiert ist, oder
(iii) automatisch nach einem Messen einer Gesamtmenge an durch den Benutzer benutztem warmem Wasser mit dem Warmwasserfühler (5) und dem Zeitgeber (6).

2. Warmwasserversorgungsvorrichtung (100), umfassend:
einen Speicherbehälter (1) zum Speichern von warmem Wasser;
eine Wärmequelle (2) zum Erwärmen des warmen Wassers in dem Speicherbehälter (1);
einen Zufuhrkanal (20), durch den das warme Wasser in dem Speicherbehälter (1) oder durch das warme Wasser in dem Speicherbehälter (1) erwärmtes warmes Wasser fließt; und
eine Steuervorrichtung (9) nach Anspruch 1.

3. Warmwasserversorgungsvorrichtung (100) nach Anspruch 2, wobei nach einem Verstreichen des gegebenen Zeitbereichs die Steuervorrichtung (9) die Menge des warmen Wassers in dem Speicherbehälter (1) an einem Ende des Erwärmungsvorgangs auf eine zweite Stoppmenge an warmem Wasser ändert, die kleiner ist als die erste Stoppmenge an warmem Wasser.

4. Warmwasserversorgungsvorrichtung (100) nach Anspruch 2, wobei die Steuervorrichtung (9) die Menge des warmen Wassers in dem Speicherbehälter (1) an einem Ende des Erwärmungsvorgangs auf eine zweite Stoppmenge an warmem Wasser ändert, die kleiner ist als die erste Stoppmenge an warmem Wasser, wenn eine Zufuhr an warmem Wasser zu einem Ende des gegebenen Zeitbereichs und noch nach einem Verstreichen des gegebenen Zeitbereichs stattfindet.

5. Warmwasserversorgungsvorrichtung (100) nach Anspruch 3 oder 4, weiter umfassend einen Temperaturmessteil zum Messen einer Temperatur des in dem Speicherbehälter (1) gespeicherten warmen Wassers und einen weiteren Temperaturmessteil zum Messen einer Temperatur von in die Wärmequelle (2) fließendem zugeführtem warmem Wasser,
wobei die Steuervorrichtung (9) auf Grundlage der Temperatur des gespeicherten warmen Wassers bestimmt, ob die Menge des warmen Wassers in dem Speicherbehälter (1) gleich oder kleiner wird als die erste Startmenge an warmem Wasser, und auch auf Grundlage der Temperatur des zugeführten warmen Wassers bestimmt, ob die Menge des in dem Speicherbehälter (1) gespeicherten warmen Wassers gleich oder größer wird als die erste Stoppmenge an warmem Wasser oder gleich oder größer wird als die zweite Stoppmenge an warmem Wasser.

6. Warmwasserversorgungsvorrichtung (100) nach Anspruch 3 oder 4, weiter umfassend einen Temperaturmessteil zum Messen einer Temperatur des in dem Speicherbehälter (1) gespeicherten warmen Wassers, und einen weiteren Temperaturmessteil zum Messen einer Temperatur von in die Wärmequelle (2) fließendem zugeführtem warmem Wasser,
wobei die Steuervorrichtung (9) auf Grundlage der Temperatur des gespeicherten warmen Wassers bestimmt, ob die Menge des warmen Wassers in dem Speicherbehälter (1) gleich oder kleiner wird als die erste Startmenge an warmem Wasser oder gleich oder kleiner wird als die zweite Startmenge an warmem Wasser, auch auf Grundlage der Temperatur des zugeführten warmen Wassers bestimmt, ob die Menge des in dem Speicherbehälter (1) gespeicherten warmen Wassers gleich oder größer wird als die erste Stoppmenge an warmem Wasser, und auch noch auf Grundlage der Temperatur des gespeicherten warmen Wassers bestimmt, ob die Menge des in dem Speicherbehälter (1) gespeicherten warmen Wassers gleich oder größer wird als die zweite Stoppmenge an warmem Wasser.

7. Warmwasserversorgungsvorrichtung (100) nach Anspruch 3 oder 4, weiter umfassend einen Temperaturmessteil zum Messen einer Temperatur des in dem Speicherbehälter (1) gespeicherten warmen Wassers, wobei der Temperaturmessteil eine Vielzahl von entlang einer Längsrichtung des Speicherbehälters (1) angeordneten Temperaturfühlern (3) enthält, und die Steuervorrichtung (9) auf Grundlage einer mit einem ersten Temperaturfühler (3a) aus der Vielzahl von Temperaturfühlern (3) gemessenen Temperatur bestimmt, ob die Menge des warmen Wassers in dem Speicherbehälter (1) gleich oder kleiner ist oder nicht als die erste Startmenge an warmem Wasser, und auf Grundlage einer mit einem oberhalb des ersten Temperaturfühlers (3a) angeordneten zweiten Temperaturfühler (3b) gemessenen Temperatur bestimmt, ob die Menge des warmen Wassers in dem Speicherbehälter (1) gleich oder kleiner ist oder nicht als die zweite Startmenge an warmem Wasser.

8. Warmwasserversorgungsvorrichtung (100) nach Anspruch 7, wobei die Steuervorrichtung (9) auf Grundlage der mit dem ersten Temperaturfühler (3a) aus der Vielzahl von Temperaturfühlern (3) gemessenen Temperatur bestimmt, ob die Menge des warmen Wassers in dem Speicherbehälter (1) gleich oder größer ist oder nicht als die erste Stoppmenge an warmem Wasser, und auf Grundlage der mit dem oberhalb des ersten Temperaturfühlers (3a) angeordneten zweiten Temperaturfühler (3b) gemessenen Temperatur bestimmt, ob die Menge des warmen Wassers in dem Speicherbehälter (1) gleich oder größer ist oder nicht als die zweite Stoppmenge an warmem Wasser.

## Revendications

1. Organe de commande (9) destiné à être utilisé dans un dispositif (100) d'alimentation en eau chaude, avec un réservoir de stockage (1) pour stocker de l'eau chaude, une source de chaleur (2) pour chauffer l'eau chaude dans le réservoir de stockage (1) et un canal d'alimentation (20) à travers lequel circule l'eau chaude dans le réservoir de stockage (1) ou l'eau chaude chauffée par l'eau chaude dans le réservoir de stockage (1), l'organe de commande (9) comprenant une horloge (6) pour déterminer une heure actuelle et une partie de réglage (7) pour régler une zone horaire,
dans lequel l'organe de commande (9) est configuré pour exécuter une opération de chauffage pour chauffer l'eau chaude dans le réservoir de stockage (1),
dans lequel l'organe de commande (9) démarre l'opération de chauffage lorsqu'une quantité de l'eau chaude dans le réservoir de stockage (1) devient égale ou inférieure à une première quantité de démarrage d'eau chaude, et arrête l'opération de chauffage lorsque la quantité de l'eau chaude dans le réservoir de stockage (1) devient égale ou supérieure à une première quantité d'arrêt d'eau chaude,
**caractérisé en ce que** l'organe de commande, avant le démarrage de l'opération de chauffage, modifie la quantité d'eau chaude dans le réservoir de stockage (1) en une seconde quantité de démarrage d'eau chaude supérieure à la première quantité de démarrage d'eau chaude lorsqu'une alimentation en eau chaude a lieu à la fin d'une zone horaire déterminée dans laquelle est consommée une quantité maximale d'eau chaude par unité de temps au sein d'un cycle de fonctionnement,
sachant que la zone horaire déterminée peut être réglée:
(i) lorsque le dispositif (100) d'alimentation en eau chaude est installé,
(ii) dans la partie de réglage (7) directement par l'utilisateur après que le dispositif (100) d'alimentation en eau chaude ait été installé ou
(iii) automatiquement, après la mesure, via le capteur d'eau chaude (5) et l'horloge (6), d'une quantité totale d'eau chaude utilisée par l'utilisateur.

2. Dispositif (100) d'alimentation en eau chaude comprenant:
un réservoir de stockage (1) pour stocker de l'eau chaude;
une source de chaleur (2) pour chauffer l'eau chaude dans le réservoir de stockage (1);
un canal d'alimentation (20) à travers lequel circule l'eau chaude dans le réservoir de stockage (1) ou l'eau chaude chauffée par l'eau chaude dans le réservoir de stockage (1); et
un organe de commande (9) selon la revendication 1.

3. Dispositif (100) d'alimentation en eau chaude selon la revendication 2, dans lequel après un laps de temps de zone horaire déterminée, l'organe de commande (9) modifie la quantité d'eau chaude dans le réservoir de stockage (1) à une fin de l'opération de chauffage en une seconde quantité d'arrêt d'eau chaude inférieure à la première quantité d'arrêt d'eau chaude.

4. Dispositif (100) d'alimentation en eau chaude selon la revendication 2, dans lequel l'organe de commande (9) modifie la quantité d'eau chaude dans le réservoir de stockage (1) à une fin de l'opération de chauffage en une seconde quantité d'arrêt d'eau chaude inférieure à la première quantité d'arrêt d'eau chaude lorsqu'une alimentation en eau chaude a lieu à une fin de la zone horaire déterminée, mais après un laps de temps de la zone horaire déterminée.

5. Dispositif (100) d'alimentation en eau chaude selon la revendication 3 ou 4, comprenant en outre une partie de mesure de température pour mesurer une température de l'eau chaude stockée dans le réservoir de stockage (1), et une autre partie de mesure de température pour mesure une température de l'eau chaude d'admission circulant dans la source de chaleur (2),
dans lequel l'organe de commande (9), sur la base de la température de l'eau stockée, détermine si la quantité de l'eau chaude dans le réservoir de stockage (1) devient égale ou inférieure à la première quantité de démarrage d'eau chaude ou devient égale ou inférieure à la seconde quantité de démarrage d'eau chaude, et détermine également, sur la base de la température de l'eau chaude d'admission, si la quantité de l'eau chaude dans le réservoir de stockage (1) devient égale ou supérieure à la première quantité d'arrêt d'eau chaude ou devient égale ou supérieure à la seconde quantité d'arrêt d'eau chaude.

6. Dispositif (100) d'alimentation en eau chaude selon la revendication 3 ou 4, comprenant en outre une partie de mesure de température pour mesurer une température de l'eau chaude stockée dans le réservoir de stockage (1), et une autre partie de mesure de température pour mesure une température de l'eau chaude d'admission circulant dans la source de chaleur (2),
dans lequel l'organe de commande (9), sur la base de la température de l'eau stockée, détermine si la quantité de l'eau chaude dans le réservoir de stockage (1) devient égale ou inférieure à la première quantité de démarrage d'eau chaude ou devient égale ou inférieure à la seconde quantité de démarrage d'eau chaude, et détermine également, sur la base de la température de l'eau chaude d'admission, si la quantité de l'eau chaude stockée dans le réservoir de stockage (1) devient égale ou supérieure à la première quantité d'arrêt d'eau chaude, et détermine encore, sur la base de la température de l'eau chaude stockée, si la quantité d'eau chaude stockée dans le réservoir de stockage (1) devient égale ou supérieure à la seconde quantité d'arrêt d'eau chaude.

7. Dispositif (100) d'alimentation en eau chaude selon la revendication 3 ou 4, comprenant en outre une partie de mesure de température pour mesurer une température de l'eau chaude stockée dans le réservoir de stockage (1), dans lequel la partie de mesure de température comprend une multitude de sondes (3) de température disposées le long d'une direction longitudinale du réservoir de stockage (1), et l'organe de commande (9), sur la base d'une température mesurée à l'aide d'une première sonde (3a) de température de la multitude de sondes (3) de température, détermine si, ou non, la quantité d'eau chaude dans le réservoir de stockage (1) est égale ou inférieure à la première quantité de démarrage d'eau chaude, et détermine, sur la base d'une température mesurée à l'aide d'une seconde sonde (3b) de température disposée au-dessus de la première sonde (3a) de température, si, ou non, la quantité d'eau chaude dans le réservoir de stockage (1) est égale ou inférieure à la seconde quantité de démarrage d'eau chaude.

8. Dispositif (100) d'alimentation en eau chaude selon la revendication 7, dans lequel l'organe de commande (9), sur la base de la température mesurée par la première sonde (3a) de température de la multitude de sondes (3) de température, détermine si, ou non, la quantité d'eau chaude dans le réservoir de stockage (1) est égale ou supérieure à la première quantité d'arrêt d'eau chaude, et détermine, sur la base de la température mesurée par la seconde sonde (3b) de température disposée au-dessus de la première sonde (3a) de température, si. ou non, la quantité d'eau chaude dans le réservoir de stockage (1) est égale ou supérieure à la seconde quantité d'arrêt d'eau chaude.
